# EUROPEAN PATENT APPLICATION

(11) **EP 1 389 421 A1**
(43) Date of publication of application: **18.02.2004**
(21) Application number: 02711881.9
(22) Date of filing: 11.02.2002
(51) Int. Cl.: A01K 11/00

(54) **IMPROVED EAR TAG**

(30) Priority: 24.04.2001 ES 200100953
(71) Applicant: Signe, S.A., 28760 Tres Cantos Madrid (ES)
(72) Inventor: PINEDO CRESPO, José, Luis, E-28023 Aravaca Madrid (ES)
(74) Representative: Urizar Anasagasti, Jesus Maria
(86) International application number: PCT/ES2002/000064
(87) International publication number: WO 2002/087317

(57) **Abstract**

Improved ear tag formed by two parts, a tap part (1) and a socket part (2), wherein a capsule for medicinal substances and a piston (4) are incorporated and the stem of the tap part (6) passes through the ear of the animal (5). Catadioptric elements (7) a reading and writing chip and anti-falsification elements are placed on both parts and with the elements so that the pincer or tong parts permit placing the crottle (8 and 9).

## Description

### OBJECT OF THE INVENTION

The present specification refers to a patent of invention application regarding an improved ear tag with different printed and electronic devices and components for identifying bovine, ovine, caprine and porcine animal species, which incorporates a cylindrical shaped capsule that can contain medicinal solutions inside.

### FIELD OF THE INVENTION

This invention is applicable within the industry dedicated to manufacturing components for identifying animals within the livestock sector.

### BACKGROUND OF THE INVENTION

The applicant knows the existence of different types of crottles for identifying livestock including fixation and identification devices.

More specifically, the applicant knows the existence of Spanish patent of invention number 9801340, of the same applicant, wherein a small spherical or ellipsoidal capsule is included that incorporates different medicinal substances but with a limited capacity. Said patent also incorporates bar codes for electronic reading and subsequent identification.

In said case, there is the problem of the limited capacity of the capsule with medicinal substances, since a larger size would imply that the hole in the ear would be larger, with the subsequent pain for the animal.

On the other hand, the identification devices can be easily falsified due to their simplicity.

The solution to these drawbacks is to provide the crottle with a system that permits including a larger amount of medicinal substances and which incorporates different identification systems that are easy to read and difficult to falsify.

However, up to now, there is no knowledge of the existence of an invention provided with the features identified as suitable.

### DESCRIPTION OF THE INVENTION

The improved crottle proposed by the invention, following the recommendations of the European Union concerning animal identification and considering the possible electronic identification of bovine, ovine, caprine and porcine animal species, incorporates a cylindrical shaped capsule that can contain a sufficient amount of medicinal solutions inside from 0.40 to 1.35 ml or more, depending on the section of the socket part and the piston.

It is known that the placement of the crottle in the animals' ears causes infections, giving way to a deterioration of the animal's health, generating a reduction of the amount and quality of the meat and other products obtained from the animal, and, in 0.2% of the animals, it can even cause death.

The improved crottle incorporates a capsule with a sufficient capacity so as to house antiseptics, antibiotics, analgesics, anti-inflammatories, anesthetics and other medicinal substances, which breaks when assembled, permitting the release of the substance contained inside which is distributed in the cartilaginous area of the ear where the wound is generated and, by wetting this entire area, it prevents the previously mentioned drawbacks while it reduces the pain and swelling.

The capsule can also incorporate vaccinations and substances for certain treatments, permitting showing unequivocal evidence of its application.

The crottle permits visually identifying the animal as the identifying code of the animal is etched by laser in both a numerical and bar code form, as well as electronically identifying the animal since it incorporates an electronic system composed of a transponder that is compatible with the technical specifications of the ISO 11784 and ISO 11785 standards, which sends a signal that is picked up by a reader, thus permitting the identification of the animal as well as the subsequent computer treatment.

The improved crottle includes reflective or catadioptric substances which permit the nocturnal visualization of the position of the animal, thus being possible to prevent accidents due to the presence of loose animals on public roads. It also incorporates fluorescent dyes which permit locating the animal due to its phosphorescence in cases of total darkness.

The improved crottle has a hollow area to place a hologram, making it even more difficult to be falsified.

The crottle is made of a flexible plastic material, it is unalterable and easily legible, not reusable and it has two parts, a tap and socket part.

The tap part is constituted of a lamina of plastic material which incorporates a stem finished in a double, conical tip and which is star-shaped due to several small grooves or small channels on the surface thereof which give it this aspect and through which the solution contained in the capsule descends when it is broken.

The conical section of the pin stem like a non-return ring once fitted inside the socket part of the crottle.

The lamina of plastic material has a ridge or snug preventing total contact of the ear of the animal with the tap part, thus aiding the solution of the capsule in accessing a larger auricular surface and aiding in the subsequent passing of air to prevent anaerobic environments next to the wound that is produced.

The stem is hollow and this cavity houses the tip of the pincer for placing the crottle.

This tap part goes through the animal's ear and is inserted in a second part or socket part.

The socket part is constituted of a lamina of plastic material, it has a receptacle with a hole in which the stem of the tap part is housed, the ear of the animal thereby being retained between both parts.

The capsule with the medicinal solution is housed in this cavity.

The receptacle has a ridge on its upper part which, like on the tap part, prevents total contact with the animal's ear, thus aiding the solution of the capsule in accessing a larger auricular surface and aiding in the subsequent passing of air to prevent anaerobic environments next the wound that is produced.

The socket part receptacle has several notches on its inner part which are responsible for receiving the snugs of the piston in order to control the advance and adjustment thereof.

It also has several capillaries on its upper part which put the capsule in contact with the outside, and permit the discharge of liquid through them when the capsule is broken.

On the lower part of the socket part, the piston is, which is responsible for pressuring the capsule with the medicinal solution to meet with the tip of the stem with the subsequent breaking thereof.

The stem of the tap part is housed in this piston, and it has a circular slit on its lower part where the other tip of the crottle placement pin is housed.

The electronic device is optionally located on the lower part of the piston or on either the tap or socket parts.

### DESCRIPTION OF THE DRAWINGS

To complement the description that is being given and for the purpose of helping to better understand the features of the invention, four sheets of drawings accompany the present specification as an integrating part thereof which, with an illustrative and non-limiting character, show the following:

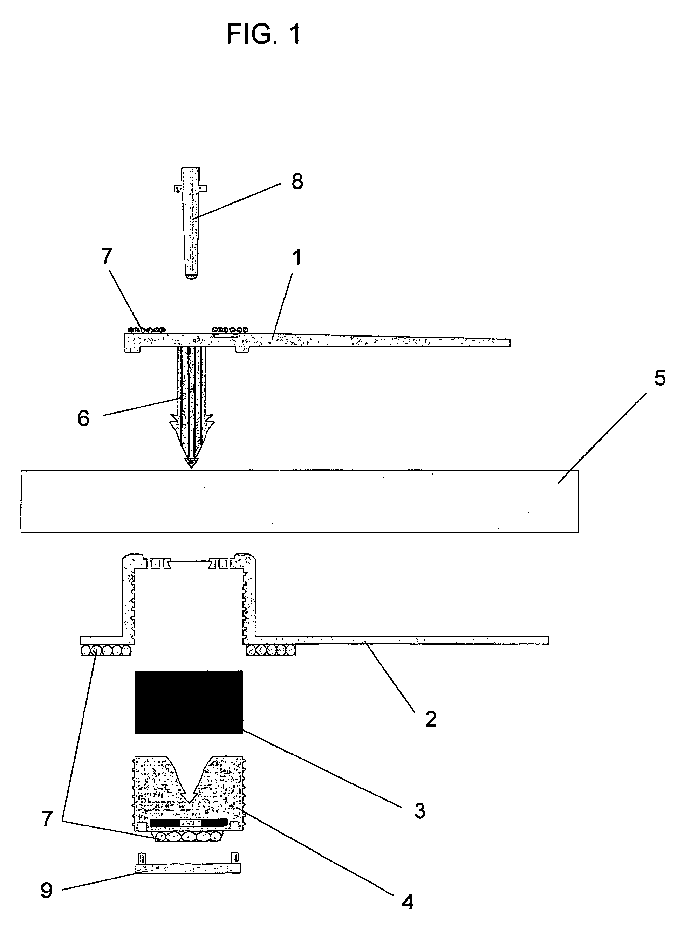

Figure 1.- Shows a side view of the improved crottle formed by two parts, a tap part (1) and a socket part (2), in which the capsule (3) for medicinal substances and the piston (4) are incorporated, and between both parts, a cut in the ear of the animal (5) is shown which will be passed through by the stem of the tap part (6). The catadioptric elements (7) are placed on both parts and the placement pincer or grip of the crottle (8 and 9) are shown in the uppermost and lowermost parts.

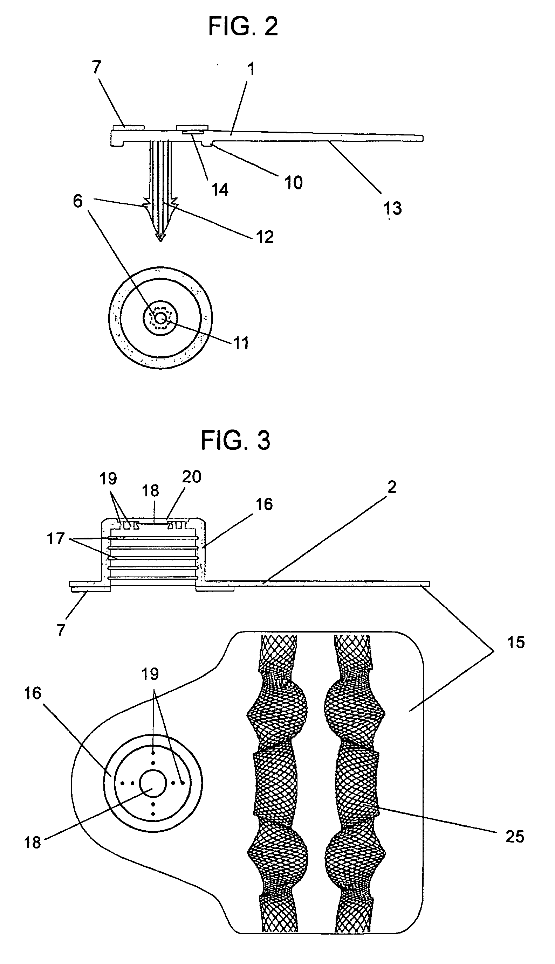

Figure 2.- Shows a detail of the tap part with a lamina of plastic material (13) incorporating a stem (6) that ends in a double conical tip and star shaped due to several small grooves or channels (12) on the surface thereof giving it this aspect and through which the solution contained in the capsule ascends when the latter is broken and which is retained due to the projections on the lower side (10). It also incorporates a hollow area (14) on the upper part to optionally house an anti-falsification hologram.
Figure 3.- Shows a side and upper view of the socket part (2) where a lamina (15) and a cylindrical part (16) can be seen that are intended to house the capsule inside, whose inner part has notches (17) that are intended to retain the piston, and a lamina (18) on the upper part which will be broken by the stem of the tap part. Around the hole, there are other small holes of a small section or capillaries (19) through which the content of the capsule passes through when it is broken. There is a small hollow receptacle (20) in the upper area of the cylindrical part, which is intended to retain the content of the capsule passing through the capillaries.

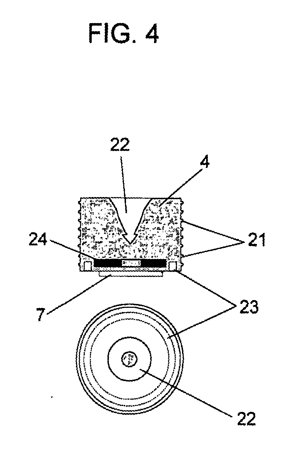

Figure 4.- Shows a view of the piston (4) that is placed inside the socket part, constituted of a cylindrical part and several projections or snugs (21) on the sides, and a hollow area (22) on the upper part formed by two superimposed cones, and a circular groove (23) on the lower part, the chip (24) is optionally placed on the inner lower part, and the reflective or catadioptric elements (7) are placed on the outside.

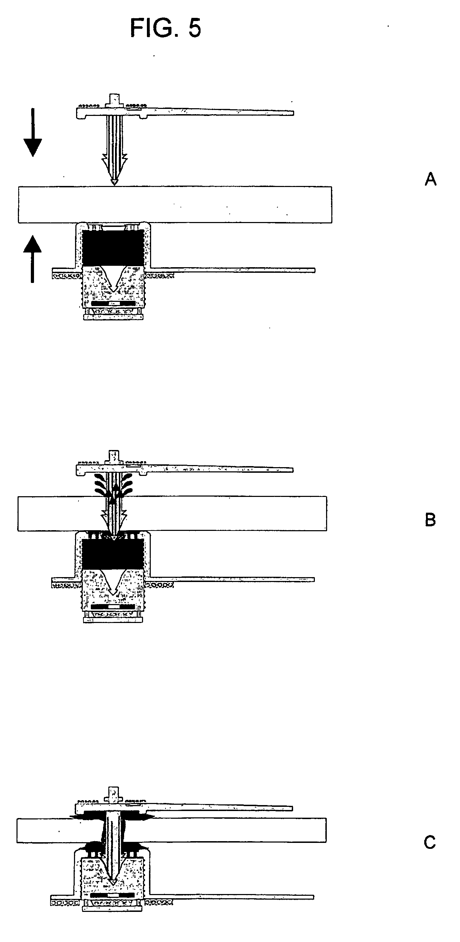

Figure 5.- Shows three phases of the crottle placement in the ear of the animal. Phase A shows the crottle prepared to be placed with the different parts assembled and the placement pincer also placed on the tap part and on the piston of the socket part.

By exerting pressure, as seen in phase B, the sharp stem of the tap part passes through the ear before the piston breaks the capsule, since the latter is retained in the grooves of the cylindrical part of the socket part and when the stem has passed through the ear, it pinches the capsule, giving way the discharge of the content of the latter, which passes through the capillaries and goes up the grooves of the stem until the other part, thereby being temporarily retained in the hollow areas of both parts.

Greater pressure, as seen in phase C, gives rise to all the content of the capsule being extracted, wetting the entire area on both sides and both tap and socket parts thereby being irreversibly hooked.

It is not considered necessary to amplify the present specification so that a skilled person in the art understands the scope of the invention and the advantages derived from it.

The elements, arrangement, size and manufacturing material will be susceptible to amendments as long as it does not alter the essence of the invention.

The terms in which the present specification has been written should always be taken with an ample and not limiting character.

## Claims

1. Improved ear tag, **characterized in that** it is constituted of two parts, a tap part (1) and a socket part (2), both having a lamina including identification elements and reflective or catadioptric elements (7). The tap part has a sharp stem with a double conical tip and with several longitudinal grooves (12) running over it, the socket part (2) has a cylindrical part (16) with several notches (17) on the inner walls inside of which the capsule (3) and the piston (4) are placed, and a hole (18) in the upper part around which there are other small holes of a small section or capillaries (19), and a small hollow receptacle (20) is arranged in the lower area of the cylindrical part.

2. Improved ear tag according to the first claim, **characterized in that** it incorporates a reading and writing chip (24) on any of its three parts, the tap part (1), socket part (2) or piston (4).

3. Improved ear tag according to the previous claims, **characterized in that** it includes a socket part (2) with a cylindrical part (16) whose inner walls have several notches (17) in a variable number with a separation equal to the upper part, a lamina (18) covering a hole surrounded by other small holes of a small section or capillaries (19) and there is a small hollow receptacle (20) in the upper area of the cylindrical part.

4. Improved ear tag according to the previous claims, **characterized in that** it includes a piston (4) located inside of the cylindrical part (16) of the socket part, constituted of a cylindrical part and several protrusions or snugs (21) on the sides, and a hollow area (22) on the upper part, formed by two superimposed cones, and a circular groove (23) on the lower part, the chip (24) is optionally placed on the lower, inner part and the reflective or catadioptric elements (7) are placed on the outside.

5. Improved ear tag according to the previous claims, **characterized in that** it includes a security hologram on any of its three parts, the tap part (1), socket part (2) or hollow part (14).

6. Improved ear tag according to the previous claims, **characterized in that** it incorporates a security engraving (25) against falsification on the laminar areas (14) and (15).

7. Improved ear tag according to the previous claims, **characterized in that** it incorporates fluorescent dyes.
